# EUROPEAN PATENT SPECIFICATION

(11) **EP 3 466 254 B1**
(45) Date of publication and mention of the grant of the patent: **29.09.2021**
(21) Application number: 16906963.0
(22) Date of filing: 31.08.2016
(51) Int. Cl.: B63B 35/26, A01K 61/60, A01K 61/65

(54) **OFFSHORE AQUACULTURE FACILITY BASED ON BULK CARRIER REFITTING**
OFFSHORE-AQUAKULTURANLAGE BASIEREND AUF EINER SCHÜTTGUTFRACHTERUMRÜSTUNG
INSTALLATION D'AQUACULTURE EN MER BASÉE SUR LE RECYCLAGE DE VRAQUIER

(30) Priority: 29.06.2016 CN 201610489874
(43) Date of publication of application: 10.04.2019
(73) Proprietor: Hainan Minde Ocean Development Co., Ltd, Haikou, Hainan 570100 (CN)
(72) Inventor: SUN, Yanlai, Dalian, Liaoning 116000 (CN)
(74) Representative: Hanna Moore + Curley
(86) International application number: PCT/CN2016/097456
(87) International publication number: WO 2018/000566

(56) References cited:
- WO-A1-2014/017920
- WO-A1-2018/000566
- CN-A- 105 475 194
- CN-B- 102 939 917
- CN-U- 201 821 752
- CN-U- 203 186 551
- FR-A1- 2 862 276
- US-A- 4 176 615
- US-A- 4 909 186
- US-A- 4 930 444
- US-A- 5 095 851

## Description

### Technical Field

This invention involves an offshore aquaculture system and falls into the field of fishing equipment.

### Background Art

There are two types of aquaculture facilities: inshore aquaculture and offshore aquaculture. Inshore farming is widely adopted but with obvious disadvantages. First, fish survival rate is not high due to serious pollution, especially frequent red tides. Second, fish net cages are often destroyed by typhoons and tropical storms which happen off the coast of China frequently. Offshore aquaculture is mainly adopted in Norway. But due to the high production and operating costs, it is only suitable for farming high-value species, such as salmon. Bulk cargo ships, for example Cape of Good Hope (with a molded depth of 25 m) and volume of up to 200,000 m³), are ideal for being retrofit for fish farming and operating along the coast of China for its structure. However, the technical difficulties lie in: 1. Liquid goods are not allowed in bulk cargo ships; 2. There is no cost-effective mooring equipment for long-time mooring on the high seas; 3. For the extreme sea conditions caused by frequent typhoons and tropical storms off the coast of China, technical solutions need to be found to maintain the strength, stability and fatigue resistance; 4. The water temperature in the northern waters is the most suitable for salmon farming in China. But the surface water temperature in summer is more than 25 °C and as low as 0 °C in winter. Salmons cannot grow and their lives may be threatened for the rest of four months a year. There are a number of options for the mooring of fish-farming vessels. But if fishing vessels are required to be fixed in a sea area for a long time and be able to resist typhoons, it is necessary to refer to the maritime mooring model adopted in the offshore oil and gas industry for safety and maneuverability. But the downside is that existing designs are extremely expensive, and many of the special designs for the oil and gas industry are not suitable for offshore aquaculture. A large number of auxiliary ships are needed to assist offshore fish farming such as live fish transport vessels, feed supply ships, refrigeration vessels, etc. Since China's offshore aquaculture industry is still in its infancy, the development of auxiliary fleet is more lagging behind.

WO 2014/017920 describes an aquaculture system for farming of marine organisms, carbon binding, and production of fertilizer and electricity in a floating production plant, preferably in a refurbished ocean going tanker, comprising a number of closed tanks filled with water to contain the organisms, and also associated pumps and pipelines, where each tank comprises water inlets and water outlets for circulating water that is collected from the surrounding sea.

FR 2 862 276 describes a sea-vessel for the trans-oceanic transporting of live tuna fish, directly from a fishing zone to a point of sale.

### Description of the Invention

In order to solve the defects of the existing technology, this invention aims to provide an offshore aquaculture facility based on modified bulk cargo ship at a reasonable price, suitable for operation in China's coastal areas which will be helpful for solving the problem of overcapacity in the bulk cargo transport industry. The invention provides therefore an offshore aquaculture facility comprising the features of independent claim 1. Preferred embodiments of the invention are set out in the dependent claims.

The technical plan of this invention is: converting a bulk cargo ship into a floating offshore facility at sea, with a movable hoisting system on the deck and a number of cultivation tanks below the deck and a water-changing system in the cultivation tanks. There are sealed void spaces between the shell plate of the facility and the outer wall of the cultivation tank to provide buoyancy for the facility. There are auxiliary compartments which are equipped with a water monitoring system, and equipment compartments on the deck. A mooring device is installed in the bow deck of the facility. The said cultivation tanks have fish suction and collection holes, and a number of water changing holes which are connected with the open holes on the shell plate of the facility. And the bottom of the cultivation tank is provided with a water ballast pump inlet and a dead fish collection hole connected with the dead fish collection cabin. The side wall of the cultivation tank is installed with an oxygenation device, and the outlet for the oxygenation device is located at the bottom of the cultivation tank.

The said movable hoisting system comprises a movable deck crane and a mobile trolley which move on tracks installed on the deck. The said movable deck crane is used for lifting heavy items and collecting net cages.

The said deck is installed with wind generators, a drive device located at the stern part the hull and solar panels on the top of the auxiliary compartments.

The said auxiliary compartments comprise a bait storage compartment, a product processing compartment, a cold storage compartment, a compartment for the feeding system and fish farming management system as well as an oxygenation control compartment. The water monitoring system is located in the compartment for the feeding system and fish farming management system.

The said equipment compartments comprise a compartment for the fish suction pumps, a battery room, a bait feeder compartment and compartments for underwater monitoring equipment, ROVs, and dead fish collection and treatment equipment.

The said bait storage compartment comes in three located in the front, middle and rear of the deck respectively, each with a volume of 1500-2000m³.

The temperature of the said cold storage compartment is of 0-3°C.

The said mooring device is according to the invention a single point mooring device, including a mooring steel arm which is connected to the bow of the offshore aquaculture facility by a rotating shaft structure, and to a single point buoy structure by a universal joint. The single point buoy structure described comprises a turntable structure which rotates in the center connecting the rotary bearing. The turntable structure is connected to the rotary head at the bottom. The rotary head is fitted with mooring anchor chains and has six chain holes at the bottom. The mooring anchor chain extends outside the cylinder body through the chain hole which is provided with a chain stopper to control the length of the chain.

The said mooring steel arm is 1m in diameter and the height from the bottom to the top of the buoy is 6.5m, and the diameter of the buoy is 12m, and the ends of the six mooring anchor chains are fixed at six anchor points respectively which are located on the same circumference with a radius of 550m.

The benefit of the invention is that it is suitable for salmon cultivation in the northern part of the Yellow Sea or other waters and it can be up to 100-200 nautical miles offshore at waters as deep as 50m. It is suitable for waters as deep as 1000-3000m with a total volume of 170,000 m³ of water for fish farming. The bulk cargo ship has the optimal structure for fish farming. There are 90 holes on the side of the ship connected to the sea with a total cross sectional area of 280 m². Based on the average 0.2m/s speed between the ocean current and the ship, the natural water changing volume can reach 200,000 m³ per hour, and the number of natural water changes can be up to 28 times a day. If mounted with the stern thrust with power generated by wind, over 30 times of water changes can happen. And deep-sea water exchange is used to ensure that the water temperature in the two seasons of winter and summer can also meet the survival and growth needs of salmon. The hull designed in accordance with DNVGL/CCS or the international marine engineering standards of other authoritative agencies, supplemented by specially designed single-point mooring, can resist the strongest typhoon that may occur in the area, ensuring that it can operate in a fixed sea area for 10 consecutive years under any sea condition. The new design of single point mooring is greatly simplified compared with the current offshore oil industry while strengthening the capability of resisting typhoons and making the frequent connection and detachment easier at a low cost with good practicality. With wind power, electricity can be supplied continuously on the ship. And the ship is equipped with basic salmon cultivation equipments, such as bait feeder, fish suction pumps, underwater monitoring devices, ROVs, dead fish collection and treatment equipment, etc. When necessary, power can be restored for self-propulsion at a speed up to 10-15 knots.

### Description of Figures

This invention is attached with nine figures.
FIG. 1 is a sectional view of the ship;
FIG. 2 is a plan view of the ship;
FIG. 3 is a plan view of the cultivation tank arrangement;
FIG. 4 is a structure diagram of the cultivation tank;
FIG. 5 is the installation diagram of the oxygenation device;
FIG. 6 is the working diagram of the mooring device;
FIG. 7 is the plan view of FIG. 6;
FIG. 8 is the enlarged partial view of FIG. 6;
FIG. 9 is the plan view of FIG. 8.

The drawings are marked as follows: 1 Deck; 2 Cultivation tank; 2.1 Water changing hole; 2.2 Dead fish collection hole; 2.3 Oxygenation device; 2.4 Water ballast pump inlet; 2.5 Fish suction and collection hole; 3 Bait storage chamber; 4 Mooring device; 4.1 Mooring steel arm; 4.2 Rotating shaft structure; 4.3 Universal joint; 4.4 Single point buoy structure; 4.5 Turntable structure; 4.6 Rotary bearing; 4.7 Rotary head; 4.8 Mooring anchor chain; 4.9 Chain stopper; 5 Product processing chamber; 6 Cold storage chamber; 7 Movable deck crane; 8 Wind generator; 9 Solar panel; 10 Drive device; 11 Oxygenation control chamber; 12 Chamber for feeding system and fish management system; 13 Fish suction pump; 14 Battery chamber; 15 Bait feeder chamber; 16 Open hole.

### Detailed description

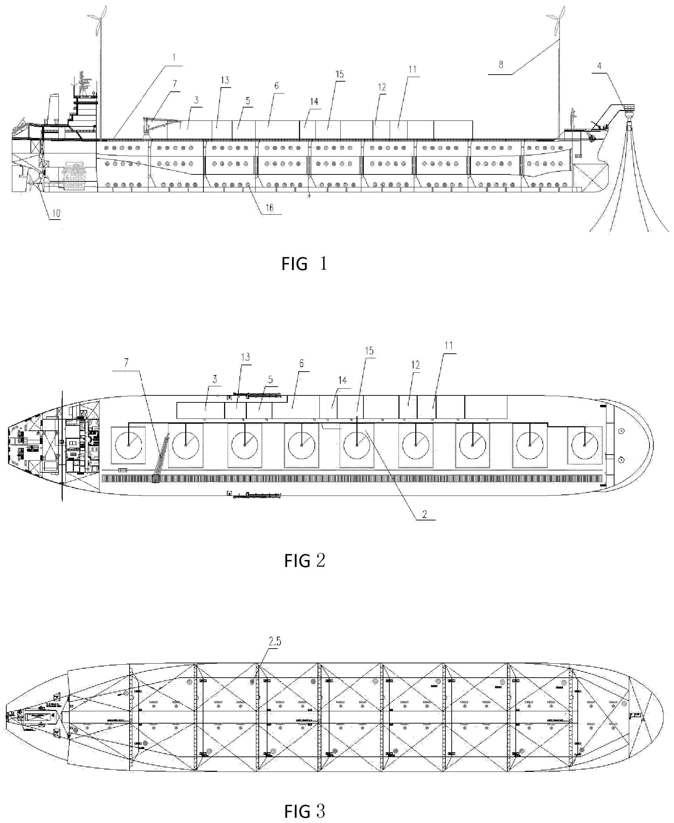

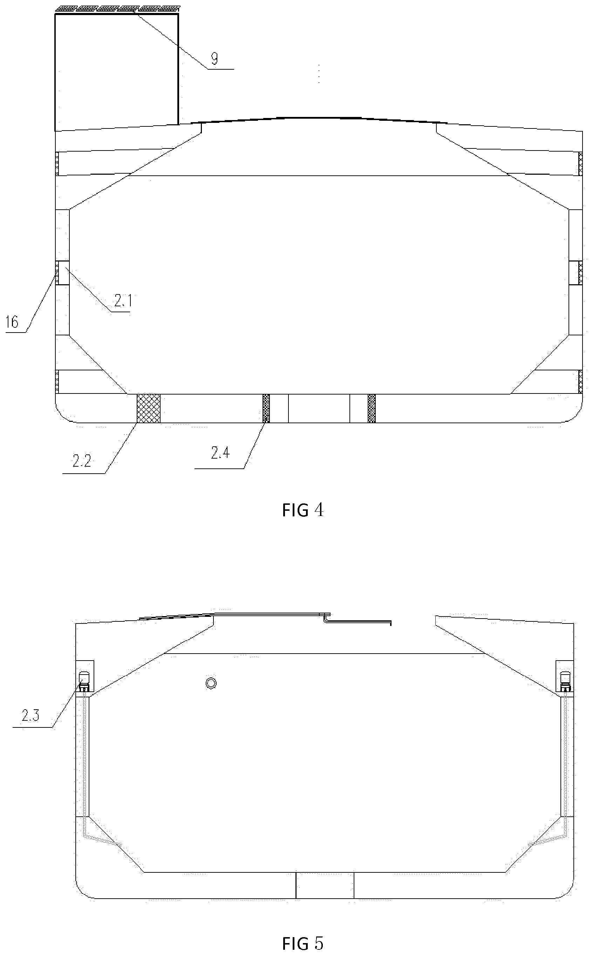

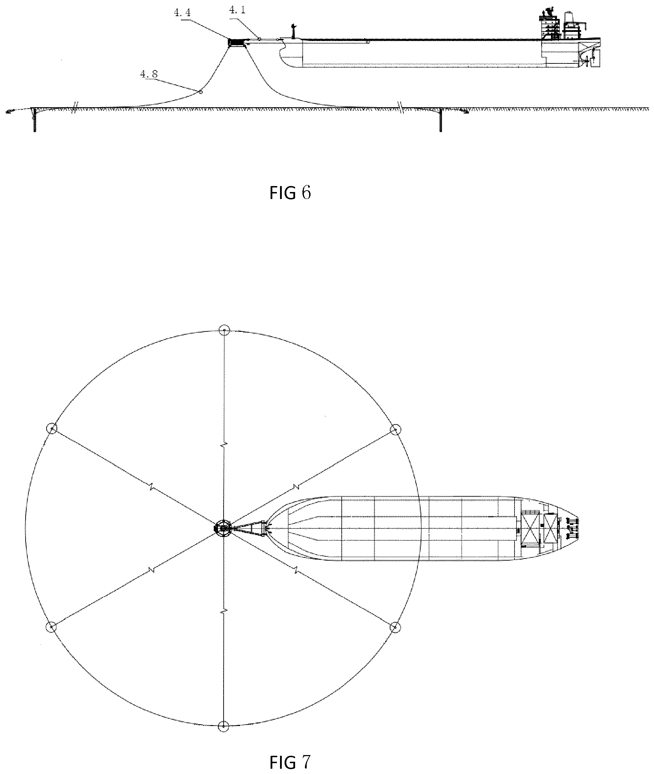

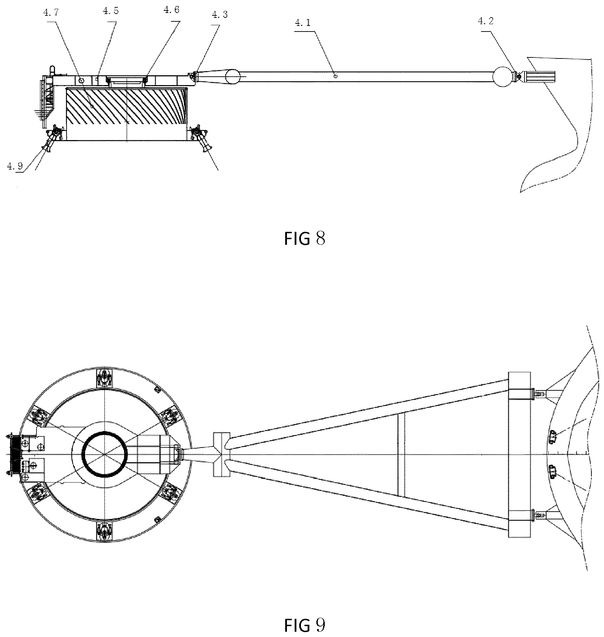

Further explanation of this invention based on FIG. 1-9 is as follows:
The offshore aquaculture facility is made by converting a bulk cargo ship into a floating offshore facility at sea. A movable hoisting system is mounted on the deck (1) with a number of cultivation tanks (2) located below the deck. There is a water-changing system in the cultivation tanks (2) and sealed void spaces between the shell plate of the offshore aquaculture facility and the outer wall of the cultivation tank (2) to provide buoyancy for the facility. There are auxiliary compartments which are equipped with a water monitoring system, and equipment compartments on the deck. And mooring equipment (4) is installed in the bow deck of the facility.

There are fish suction and collection holes (2.5) on the cultivation tanks (2), a number of water changing holes (2.1) on the cultivation tanks (2) which are connected with the open holes (16) on the shell plate of the facility, and the bottom of the cultivation tank (2) is provided with a water ballast pump inlet (2.4) and a dead fish collection hole (2.2) connected with the dead fish collection compartment. The side wall of the cultivation tank (2) is installed with an oxygenation device (2.3), and the outlet for the oxygenation device (2.3) is located at the bottom of the cultivation tank (2).

The movable hoisting system comprises a movable deck crane (7) and a mobile trolley which move on rails installed on the deck (1). The movable deck crane (7) is used for lifting heavy items and collecting net cages. Two rails are installed on the right main deck. The mobile cart is mounted on the single rail and the dual rail can be fitted with the mobile crane (7). Mobile carts are for moving lighter items while cranes can be used to move heavier items. The collection cage is placed in a specific position on the deck, for example the cabin deck, which can be moved with a deck crane. Smaller meshes of 5m*5m*4m on the cage are for collecting small fishes.

A wind generator (8) is installed on the deck (1) with the drive device (10) located at the stern part of the hull and solar panels (9) on the top of the auxiliary compartments.

The auxiliary compartments comprise a bait storage compartment(3), a product processing compartment(5), a cold storage compartment (6), a compartment for the feeding system and fish farming management system (12) and an oxygenation control compartment (11). Bait feeding is controlled with computers through which fishes can be observed, and residual baits and dead fish can be monitored. Oxygen is sucked into the cultivation tank based on demands to ensure timely and effective oxygen supply, and the oxygenation device will be installed to the top or bottom cultivation tanks. The water monitoring system is located in the compartment for the feeding system and fish farming management system (12) to collect and analyze key water quality indicators such as temperature or oxygen content, etc. of each cultivation tank. Based on the system, fish farming workers will be able to monitor the water quality of each tank in real time so that necessary measures can be taken and regular reporting can be made. The system can automatically trigger a series of necessary measures to ensure that the tank environment is always suitable for fishes: 1) When the key indicators reach the alert level, the deep-sea pump will be automatically triggered for deep-sea water exchange. 2) When the operation of the deep-sea pump in a specific period of time is still not effective in improving water quality, stern thrust will be triggered for water change. 3) If forced water change still can not effectively improve water quality for a specific period of time, oxygen production and transference equipment will be triggered to provide oxygen to the tank. 4) If the water quality still cannot be improved, the highest level of alarm will be triggered, waking up the crew to decide whether to detach and move.

The equipment compartments include a compartment for the fish suction pumps (13), a battery compartment (14), a bait feeder compartment (15), and compartments for underwater monitoring equipment, ROVs, and dead fish collection and treatment equipment.

Given the density of bait is 0.5t/m³ and the storage room is usually 85% full, 1800 tons of bait takes about 4235m³ storage space. Thus three relatively small storage chambers of about 1600m³ are set up in the forward, middle and AFT of the deck.

The temperature of the cold storage compartment (6) is 0-3°C.

The mooring device (4) which is a single point mooring device comprises a mooring steel arm (4.1) which is connected to the bow of the offshore aquaculture facility by a rotating shaft structure (4.2), and to a single point buoy structure (4.4) by a universal joint (4.3). The single point buoy structure (4.4) comprises a turntable structure (4.5) which rotates in the center connecting the rotary bearing (4.6). The turntable structure (4.5) is connected to the rotary head (4.7) at the bottom. The rotary head (4.7) is fitted with six mooring anchor chains (4.8) and has six chain holes at the bottom. And each mooring anchor chain (4.8) extends outside the rotary head through the chain hole which is provided with a chain stopper (4.9) to control the length of the chain.

The mooring steel arm (4.1) is 1m in diameter and the height from the bottom to the top of the rotary head (4.7) is 6.5m, and the diameter of the rotary head (4.7) is 12m, and the ends of the six mooring anchor chain (4.8) are fixed at six anchor points respectively which are located on the same circumference with a radius of 550m.

By modifying the existing bulk cargo ship, this patent reduced the cost of the hull by about 15%-20% based on the amount of water available for fish farming. On the outside of the hull, 180-270 large-diameter holes are opened, converting the original bulk carriers into an offshore floating structure connecting water inside and outside the ship. It is designed in accordance with the world's most stringent specifications for maritime pumice platform and up to DNVGL/CCS standards. And key indicators including strength, stability, anti-fatigue are checked and recognized. The bow is equipped with a single point mooring structure which is able to firmly fix fish boat for a period of up to 10 years and is able to resist any bad sea conditions. It is easy to connect and detach the hull and the single point, making it easy for the boat to move. The bulk cargo ship to be modified is 25 meters deep at most with the draught up to 22 meters able to meet the conditions of most of China's sea areas, especially the northern Yellow Sea. The new design of the suction equipment on the shell plate of the ship can absorb fresh seawater from a depth of 40-50 meters for the replacement of the surface seawater in the cultivation tank and create good living conditions for salmon. In addition to the open holes on the shell plate of the ship, a stern thrust will be installed to change water for over 30 times with rotations around the single point mooring propelled by wind power. Oxygen production and transference equipment is installed and can be activated any time based on the feedback of the fish farming app for emergencies. Special small fish collectors are also available to collect small fishes which are kept in separate compartments to reduce the death rate and maximize the benefits.

Thousands of ships can be transformed to such fish cultivation facilities. This is a blue sea market with broad prospect which helps digesting the excessive production capacity. The volume of marine fish cultivation in China is only 1.2 million tons. The addition of 700 tons of quality marine fish can effectively improve Chinese people's dietary structure, promote China's food safety and fish exports. It is also helpful in developing aquaculture beyond inshore to offshore, improving tourist resources of coastal cities and their life and generate more revenues from tourism. With their presence on the sea, fish cultivation ships with this design are also helpful in solving maritime disputes between China and neighboring countries. If over 1,000 such ships are to be built, 2,000-3,000 supporting vessels will be needed for feed supply, fish transport, processing, cold storage, etc, which will drive the development of China's ship and relevant equipment manufacturing industries.

The embodiments described above are only some preferred embodiments of the present invention. It must be pointed out that general technical personnel in this field can make improvements and modifications within the scope of the present invention defined by the appended claims.

## Claims

1. An offshore aquaculture facility based on modified bulk cargo ship comprising a movable hoisting system located on a deck (1) of the facility, a number of cultivation tanks (2) located below the deck (1), water changing systems in the cultivation tanks (2), void spaces between the shell plate of the offshore aquaculture facility and an outer side wall of the cultivation tanks (2) to provide buoyancy for the facility, as well as auxiliary compartments equipped with a water monitoring system and equipment compartments on the deck (1), and a mooring device (4) installed in bow deck of the facility, wherein said mooring device (4) is a single point mooring device comprising a mooring steel arm (4.1) which is connected to the bow of the offshore aquaculture facility by a rotating shaft structure (4.2), and to a single point buoy structure (4.4) by a universal joint (4.3), the single point buoy structure (4.4) comprising a turntable structure (4.5) which is rotatably connected in its center via a rotary bearing (4.6) to a rotary head (4.7) at the bottom of the single point structure, the rotary head (4.7) being fitted with six mooring anchor chains (4.8) and having six chain holes at the bottom, the mooring anchor chains (4.8) extending outside the rotary head through the chain holes which are provided with chain stoppers (4.9) to control the length of the chains, wherein the cultivation tanks (2) are provided with fish suction and collection holes (2.5),wherein a number of water changing holes (2.1) on the cultivation tanks (2) are connected with open holes (16) connected to the sea on the shell plate of the facility, wherein the bottom of the cultivation tanks (2) is provided with a water ballast pump inlet (2.4) and a dead fish collection hole (2.2) connected with a dead fish collection compartment, wherein a side wall of the cultivation tanks (2) is installed with an oxygenation device (2.3), an outlet for the oxygenation device (2.3) being located at the bottom of the cultivation tank (2).

2. The offshore aquaculture facility based on modified bulk cargo ship according to claim 1, is **characterized by** the movable hoisting system comprising a movable deck crane (7) and a mobile trolley which move on rails installed on the deck (1), the movable deck crane (7) being used for lifting heavy items and collecting net cages.

3. The offshore aquaculture facility based on modified bulk cargo ship according to claim 1, is **characterized by** a wind generator (8) on the deck (1), a drive device (10) located at the stern part of the hull and solar panels (9) on the top of the auxiliary compartments.

4. The offshore aquaculture facility based on modified bulk cargo ship according to claim 1, is **characterized by** auxiliary compartments comprising a bait storage compartment(3), a product processing compartment (5), a cold storage compartment(6), a compartment for the feeding system and fish farming management system (12) and an oxygenation control compartment (11)wherein water monitoring system is located in the compartment for the feeding system and fish farming management system (12).

5. The offshore aquaculture facility based on modified bulk cargo ship according to claim 1, is **characterized by** an equipment chamber, which includes a compartment for the fish suction pumps (13), a battery room (14), a bait feeder compartment (15), compartments for underwater monitoring equipment, ROVs, and said dead fish collection and treatment equipment.

6. The offshore aquaculture facility based on modified bulk cargo ship according to claim 4, is **characterized by** three bait storage compartments (3), in the forward, middle and aft of the deck (1), each with a volume of 1500-2000m³.

7. The offshore aquaculture facility based on modified bulk cargo ship according to claim 4, is **characterized by** said cold storage compartment (6) being at 0-3°C.

8. The offshore aquaculture facility based on modified bulk cargo ship according to claim 1, wherein the mooring steel arm (4.1) is 1m in diameter and the height from the bottom to the top of the rotary head (4.7) is 6.5m, and the diameter of the rotary head (4.7) is 12m, and the ends of the six mooring anchor chains (4.8) are fixed at anchor points respectively which are located on the same circumference with a radius of 550m.

## Patentansprüche

1. Offshore-Aquakulturanlage basierend auf einem modifizierten Massengutfrachter, die ein bewegbares Hebesystem, das sich auf einem Deck (1) der Anlage befindet, eine Anzahl von Kultivierungsbehältern (2), die sich unter dem Deck (1) befinden, Wasserwechselsysteme in den Kultivierungsbehältern (2), Hohlräume zwischen der Außenhaut der Offshore-Aquakulturanlage und einer äußeren Seitenwand der Kultivierungsbehälter (2), um einen Auftrieb für die Anlage bereitzustellen, sowie Zusatzabteile, die mit einem Wasserüberwachungssystem ausgerüstet sind, und Ausrüstungsabteile auf dem Deck (1), und eine Festmachungsvorrichtung (4) umfasst, die in einem Bugdeck der Anlage installiert ist, wobei die Festmachungsvorrichtung (4) eine Einpunktfestmachungsvorrichtung ist, die einen Stahlfestmachungsarm (4.1) umfasst, der durch eine drehbare Wellenstruktur (4.2) mit dem Bug der Offshore-Aquakultur und durch ein Kreuzgelenk (4.3) mit einer Einpunktbojenstruktur (4.4) verbunden ist, wobei die Einpunktbojenstruktur (4.4) eine Drehscheibenstruktur (4.5) umfasst, die in ihrem Zentrum über ein Drehlager (4.6) mit einem Drehkopf (4.7) an der Unterseite der Einpunktstruktur verbunden ist, wobei der Drehkopf (4.7) mit sechs Festmachungsankerketten (4.8) ausgestattet ist und an der Unterseite sechs Kettenlöcher aufweist, wobei sich die Festmachungsankerketten (4.8) außerhalb des Drehkopfes durch die Kettenlöcher erstrecken, die mit Kettenstoppern (4.9) versehen sind, um die Länge der Ketten zu steuern, wobei die Kultivierungsbehälter (2) mit Fischsaug- und Sammellöchern (2.5) versehen sind, wobei eine Anzahl von Wasserwechsellöchern (2.1) auf den Kultivierungsbehältern (2) mit offenen Löchern (16) verbunden sind, die auf der Außenhaut der Anlage mit dem Meer verbunden sind, wobei die Unterseite der Kultivierungsbehälter (2) mit einen Wasserballastpumpeneinlass (2.4) und einem Sammelloch (2.2) für tote Fische versehen ist, das mit einem Sammelabteil für tote Fische verbunden ist, wobei eine Seitenwand der Kultivierungsbehälter (2) mit einer Sauerstoffanreicherungsvorrichtung (2.3) installiert ist, wobei sich ein Auslass für die Sauerstoffanreicherungsvorrichtung (2.3) an der Unterseite des Kultivierungsbehälters (2) befindet.

2. Offshore-Aquakulturanlage basierend auf dem modifizierten Massengutfrachter nach Anspruch 1, **gekennzeichnet durch** das bewegbare Hebesystem, das einen bewegbaren Deckkran (7) und einen mobilen Wagen umfasst, die sich auf Schienen (1) bewegen, die auf dem Deck installiert sind, wobei der bewegbare Deckkran (7) zum Hochheben von schweren Gegenständen und zum Sammeln von Netzkäfigen verwendet wird.

3. Offshore-Aquakulturanlage basierend auf dem modifizierten Massengutfrachter nach Anspruch 1, **gekennzeichnet durch** einen Windgenerator (8) auf dem Deck (1), eine Antriebsvorrichtung (10), die sich an dem Heckteil des Rumpfes befindet, und Sonnenkollektoren (9) auf der Oberseite der Zusatzabteile.

4. Offshore-Aquakulturanlage basierend auf dem modifizierten Massengutfrachter nach Anspruch 1, **gekennzeichnet durch** Zusatzabteile, die ein Köderaufbewahrungsabteil (3), ein Produktverarbeitungsabteil (5), ein Kühlaufbewahrungsabteil (6), ein Abteil für das Fütterungssystem und ein Fischzuchtverwaltungssystem (12) und ein Sauerstoffanreicherungssteuerabteil (11) umfasst, wobei sich das Wasserüberwachungssystem in dem Abteil für das Fütterungssystem und das Fischzuchtverwaltungssystem (12) befindet.

5. Offshore-Aquakulturanlage basierend auf dem modifizierten Massengutfrachter nach Anspruch 1, **gekennzeichnet durch** eine Ausrüstungskammer, die ein Abteil für die Fischsaugpumpen (13), einen Batterieraum (14), ein Köderfutterspenderabteil (15), Abteile für Unterwasserüberwachungsausrüstung, ROVs und die Sammel- und Behandlungsausrüstung für tote Fische beinhaltet.

6. Offshore-Aquakulturanlage basierend auf dem modifizierten Massengutfrachter nach Anspruch 4, **gekennzeichnet durch** drei Köderaufbewahrungsabteile (3) in dem vorderen, mittleren und hinteren Bereich des Decks (1), je mit einem Volumen von 1500-2000 m³.

7. Offshore-Aquakulturanlage basierend auf dem modifizierten Massengutfrachter nach Anspruch 4, **gekennzeichnet durch** das Kühlaufbewahrungsabteil (6), das bei 0-3 °C ist.

8. Offshore-Aquakulturanlage basierend auf dem modifizierten Massengutfrachter nach Anspruch 1, wobei der Stahlfestmachungsarm (4.1) im Durchmesser 1 m ist und die Höhe von der Unterseite zu der Oberseite des Drehkopfes (4.7) 6,5 m beträgt und der Durchmesser des Drehkopfes (4.7) 12 m beträgt und die Enden der sechs Festmachungsankerketten (4.8) jeweils an Ankerpunkten befestigt sind, die sich auf dem gleichen Umfang mit einem Radius von 550 m befinden.

## Revendications

1. Installation d'aquaculture en mer basée sur un navire de charge en vrac modifié comprenant un système de levage mobile situé sur un pont (1) de l'installation, un certain nombre de bassins de culture (2) situés sous le pont (1), des systèmes de changement d'eau dans les bassins de culture (2), des creux de chargement entre la plaque d'enveloppe de l'installation d'aquaculture en mer et une paroi latérale extérieure des bassins de culture (2) pour assurer la flottabilité de l'installation, ainsi que des compartiments auxiliaires équipés d'un système de surveillance de l'eau et des compartiments d'équipement sur le pont (1), et un dispositif d'amarrage (4) installé dans le pont avant de l'installation, ledit dispositif d'amarrage (4) étant un dispositif d'amarrage à point unique comprenant un bras d'amarrage en acier (4.1) qui est relié à la proue de l'installation d'aquaculture en mer par une structure d'arbre rotatif (4.2), et à une structure de bouée à point unique (4.4) par un joint universel (4.3), la structure de bouée à point unique (4.4) comprenant une structure de plaque tournante (4.5) qui est reliée de manière rotative en son centre par l'intermédiaire d'un palier rotatif (4.6) à une tête rotative (4.7) au fond de la structure à point unique, la tête rotative (4.7) étant équipée de six chaînes d'ancrage d'amarrage (4.8) et ayant six trous de chaîne au fond, les chaînes d'ancrage d'amarrage (4.8) s'étendant à l'extérieur de la tête rotative à travers les trous de chaîne qui sont pourvus de bosses de chaîne (4.9) pour contrôler la longueur des chaînes, les bassins de culture (2) étant pourvus de trous d'aspiration et de collecte de poissons (2.5), dans laquelle un certain nombre de trous de changement d'eau (2.1) sur les bassins de culture (2) sont reliés à des trous ouverts (16) reliés à la mer sur la plaque d'enveloppe de l'installation, dans laquelle le fond des bassins de culture (2) est pourvu d'une entrée de pompe de ballast (2.4) et un trou de collecte de poissons morts (2.2) reliés à un compartiment de collecte de poissons morts, dans laquelle une paroi latérale des bassins de culture (2) est installée avec un dispositif d'oxygénation (2.3), une sortie pour le dispositif d'oxygénation (2.3) étant située au fond du bassin de culture (2).

2. L'installation d'aquaculture en mer basée sur un navire de chargement en vrac modifié selon la revendication 1, est **caractérisée par** le système de levage mobile comprenant une grue à pont mobile (7) et un chariot mobile qui se déplacent sur des rails installés sur le pont (1), la grue à pont mobile (7) étant utilisée pour soulever des objets lourds et collecter des cages en filet.

3. L'installation d'aquaculture en mer basée sur un navire de chargement en vrac modifié selon la revendication 1, est **caractérisée par** une éolienne (8) sur le pont (1), un dispositif d'entraînement (10) situé à la partie arrière de la coque et des panneaux solaires (9) sur le dessus des compartiments auxiliaires.

4. L'installation d'aquaculture en mer basée sur un navire de chargement en vrac modifié selon la revendication 1, est **caractérisée par** des compartiments auxiliaires comprenant un compartiment de stockage d'appâts (3), un compartiment de traitement de produits (5), un compartiment de stockage à froid (6), un compartiment pour le système d'alimentation et le système de gestion de pisciculture (12) et un compartiment de contrôle d'oxygénation (11) dans lequel le système de surveillance de l'eau est situé dans le compartiment pour le système d'alimentation et le système de gestion de pisciculture (12).

5. L'installation d'aquaculture en mer basée sur un navire de chargement en vrac modifié selon la revendication 1, est **caractérisée par** une chambre d'équipement, qui comporte un compartiment pour les pompes d'aspiration de poissons (13), une salle des batteries (14), un compartiment d'alimentation en appâts (15), des compartiments pour les équipements de surveillance sous-marine, les ROV, et lesdits équipements de collecte et de traitement des poissons morts.

6. L'installation d'aquaculture en mer basée sur un navire de chargement en vrac modifié selon la revendication 4, est **caractérisée par** trois compartiments de stockage d'appâts (3), à l'avant, au milieu et à l'arrière du pont (1), chacun avec un volume de 1500 à 2000 m³.

7. L'installation d'aquaculture en mer basée sur un navire de chargement en vrac modifié selon la revendication 4, est **caractérisée en ce que** ledit compartiment de stockage à froid (6) est à 0-3 °C.

8. Installation d'aquaculture en mer basée sur un navire de chargement en vrac modifié selon la revendication 1, dans laquelle le bras d'amarrage en acier (4.1) présente un diamètre de 1 m et la hauteur du bas vers le haut de la tête rotative (4.7) est de 6,5 m, et le diamètre de la tête rotative (4.7) est de 12 m, et les extrémités des six chaînes d'ancrage d'amarrage (4.8) sont fixées respectivement à des points d'ancrage qui sont situés sur la même circonférence avec un rayon de 550 m.
